# EUROPEAN PATENT APPLICATION

(11) **EP 4 769 015 A1**
(43) Date of publication of application: **01.07.2026**
(21) Application number: 25202665.3
(22) Date of filing: 17.09.2025
(51) Int. Cl.: G02F 1/133, F21V 8/00, G02F 1/1333, G02F 1/13357

(54) **DISPLAY APPARATUS**

(30) Priority: 31.12.2024 KR 20240202813
(71) Applicant: LG Display Co., Ltd., Seoul, 07336 (KR)
(72) Inventor: KIM, Ji Gon, Paju-si (KR); KIM, Jin Ryun, Paju-si (KR); HWANG, Yong Ik, Paju-si (KR); LEE, Min Jin, Paju-si (KR); KIM, Dae Yong, Paju-si (KR); CHOI, Eun Hee, Paju-si (KR)
(74) Representative: Ter Meer Steinmeister & Partner

(57) **Abstract**

A display apparatus includes a backlight unit including a first light guide plate and a first light source element, a liquid crystal display panel located on an upper surface of the first light guide plate and including a sensing area, and an optical module located on a lower surface of the first light guide plate and including a reflective structure having an inclined surface. The display apparatus further includes a second light source element, a optical sheet, and an optical element, wherein the inclined surface of the reflective structure overlaps the sensing area of the liquid crystal display panel, and the second light source element and the optical element are located on different surfaces of the reflective structure to minimize a luminance deviation between the active area and the sensing area of the display apparatus.

## Description

This application claims the benefit of Korean Patent Application No. 10-2024-0202813, filed on December 31, 2024.

### BACKGROUND

### Technical Field

The present disclosure relates to a display apparatus including a liquid crystal display panel and an optical module.

### Description of the Related Art

Display apparatuses equipped with liquid crystal display panels are widely used as display apparatuses for vehicles. For example, a display apparatus for vehicles may display a driving speed, a mileage, an amount of fuel remaining, navigation information, RPM, etc. In addition, a vehicle may be equipped with a safe driving assistance system, such as a driver monitoring system (DSM). The safe driving assistance system may include a camera.

However, since the display apparatus and a camera module for the driver monitoring system(DSM) mounted in the vehicle are separately disposed, there are limitations on narrowing the bezel of the display apparatus. Accordingly, it would be beneficial to have a display apparatus that overcomes this and other deficiencies and disadvantages of known solutions.

### SUMMARY

A liquid crystal display device may include a backlight and a liquid crystal display panel that generates an image using light supplied from the backlight. The backlight may include a backlight source element located on one side surface of a backlight guide plate. The liquid crystal display panel may be located above the backlight guide plate.

The display apparatus may include a light source module capable of detecting external light or capturing an image. For example, the light source module may include at least one of a camera or an IR sensor. The light source module may overlap a portion of the liquid crystal display panel. For example, the liquid crystal display panel may include an active area overlapping the backlight guide plate and a sensing area overlapping the light source module.

The sensing area may be disposed within the active area. However, since the sensing area of the liquid crystal display panel does not emit light for implementing an image, the quality of an image provided to a user may be deteriorated in the display apparatus due to a luminance deviation between the active area and the sensing area.

There is an objective to provide a display apparatus that substantially obviates one or more problems due to limitations and disadvantages of the related art.

There is an objective to provide a display apparatus capable of minimizing a luminance deviation between an active area and a sensing area.

There is an objective to provide a display apparatus that allows an optical module to detect external light through a sensing area of a liquid crystal display panel without deteriorating the quality of an image.

The disclosure is not limited to the above-mentioned objectives. The objectives of the present disclosure that are not mentioned above will be clearly understood by those skilled in the art from the following description.

At least one of the above-mentioned objectives is solved by the features of the independent claim. Further embodiments are specified by the dependent claims, in the description or the drawings.

In one aspect of the present disclosure, a display apparatus is provided. The display apparatus includes a backlight unit or backlight assembly including a first light guide plate and a first light source element, a liquid crystal display panel located on an upper surface of the first light guide plate and including a sensing area, and an optical module located on a lower surface of the first light guide plate and including a reflective structure having an inclined surface, a second light source element, a optical sheet, and an optical element, wherein the inclined surface of the reflective structure overlaps the sensing area of the liquid crystal display panel, and the second light source element and the optical element are located on different surfaces of the reflective structure.

In one aspect of the present disclosure, a display apparatus is provided. The display apparatus includes a backlight unit or backlight assembly including a first light guide plate and a first light source element, a liquid crystal display panel located on an upper surface of the first light guide plate and including a sensing area, and an optical module located on a lower surface of the first light guide plate and including a reflective structure having an inclined surface, a second light source element, and an optical element, wherein the inclined surface of the reflective structure overlaps the sensing area of the liquid crystal display panel.

In one aspect of the present disclosure, a display apparatus is provided. The display apparatus includes a backlight; a liquid crystal display panel disposed on the backlight and having a sensing area; and an optical module located under the liquid crystal display panel, the optical module including an inclined surface in a layer of the optical module that overlaps the sensing area.

In one aspect of the present disclosure, a display apparatus comprises a backlight comprising a light guide plate and a first light source; a liquid crystal display panel located on an upper surface of the light guide plate and comprising a sensing area; and an optical module located on a lower surface of the light guide plate and comprising a reflective structure having an inclined surface and/or a transmissive structure having an inclined surface, a second light source, and an optical element. The inclined surface of the reflective structure and/or the inclined surface of the transmissive structure may overlap the sensing area of the liquid crystal display panel. The second light source and the optical element may be located on or may face different surfaces of the reflective structure and/or of the transmissive structure.

The display device according to at least one aspect of the present disclosure may further comprise at least one of the following features:

The terms "backlight unit" or "backlight assembly" or "backlight" may be used synonymously. The terms "light source element" or "light source" may be used synonymously.

The reflective structure may be or include a visible light reflecting structure. The transmissive structure may be or include an infrared light transmitting structure.

The second light source and the optical element may be located on or face different surfaces of the reflective structure.

The second light source may be located outside of the sensing area.

The optical module may further comprise an optical sheet. The optical sheet may be disposed on the inclined surface of the reflective structure.

The optical sheet and the optical element may overlap the sensing area.

The optical sheet may include repeatedly disposed layers of a high refractive index material and a low refractive index material. The layers may be alternately disposed. One layer of the high refractive index material may be disposed on one layer of the low refractive index material. This set of two layers may be repeatedly disposed.

The backlight may further comprise a bottom cover. The bottom cover may be configured to accommodate the light guide plate and/or the first light source. The bottom cover may comprise a cover hole that overlaps the sensing area.

The optical module may comprise the transmissive structure reflective structure having the inclined surface. The inclined surface of the reflective structure and the inclined surface of the transmissive structure may be disposed to face each other, preferably in a horizontal direction.

The optical sheet may be disposed between the inclined surface of the reflective structure and the inclined surface of the transmissive structure. The optical sheet may touch and/or overlap the inclined surface of the reflective structure and/or the inclined surface of the transmissive structure.

The optical module may further comprise a case configured to accommodate the reflective structure and/or the transmissive structure. The case may be configured to accommodate reflective structure, the transmissive structure, the second light source, the optical sheet, and/or the optical element. The case may have an opening in a portion thereof. The opening may overlap the sensing area.

The optical sheet may be a layer stack. The optical sheet may include a high refractive index material alternately disposed with a low refractive index material, preferably layer by layer. The layer stack may comprise a high refractive index material alternately disposed with a low refractive index material. The high refractive index material may form the reflective structure. The low refractive index material may form the transmissive structure.

The high refractive index material may be configured to reflect visible light. The low refractive index material may be configured to transmit infrared light.

The high refractive index material may comprise at least one of titanium oxide (TiO₂), tantalum oxide (Ta₂O₅), or zirconium oxide (ZrO₂). The low refractive index material may comprise silica (SiO₂) or magnesium fluoride (MgF₂).

The backlight may comprise a backlight sheet located above the light guide plate. The backlight may comprise a backlight reflector located below the light guide plate. The backlight sheet may comprise a through hole configured to overlap the sensing area.

The inclined surface of the reflective structure may comprise a dichroic mirror.

The layer may be a visible light reflective layer or an infrared light transmissive layer.

The display apparatus may comprise an optical sheet on the inclined surface. The optical sheet may be a layer stack of repeatedly and optionally alternately disposed layers of a high refractive index material and a low refractive index material configured to reflect visible light and transmit infrared light.

The details of other aspects and embodiments of the disclosure are included in the detailed description and drawings.

It is to be understood that both the foregoing background and the following detailed description of the present disclosure are exemplary and explanatory and are intended to provide further explanation of the disclosure rather than limit the claims.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a schematic illustration of a display apparatus according to an embodiment of the present disclosure;
FIG. 2 includes two cross-sectional views of the display apparatus of FIG. 1 taken along lines I-I' and II-II' of FIG. 1, respectively;
FIG. 3 is an enlarged view of area K of the display apparatus of FIG. 2;
FIG. 4 is a cross-sectional view of a subpixel of the display apparatus of FIG. 1;
FIG. 5 is a schematic view showing a light source, a light guide plate, and a reflector of an optical module of the display apparatus of FIG. ;
FIG. 6 is a schematic view showing a light source and a visible light reflecting structure of an optical module according to an embodiment of the present disclosure;
FIG. 7 is a schematic view showing the configuration of a sheet of the optical module of FIG. 6; and
FIG. 8 is a graph showing the transmittance and reflectance of the sheet of FIG. 7.

### DETAILED DESCRIPTION

The aspects and technical configurations of the present disclosure and the resulting operational effects will be more clearly understood by the following detailed description with reference to the drawings illustrating embodiments of the present disclosure. Here, since the embodiments of the present disclosure are provided to fully convey the technical idea of the present disclosure to those skilled in the art, the present disclosure may be embodied in other forms so as not to be limited to the embodiments described below.

In addition, parts indicated by the same reference numerals throughout the description refer to the same components, unless the context dictates otherwise, and the lengths and thicknesses of layers or regions in the drawings may be exaggerated for convenience. In some examples, the drawings or certain aspects of the drawings are to scale. In addition, when a first component is referred to as being "on" a second component, the first component may be directly on the second component, or a third component may be located between the first component and the second component.

The terms "first," "second," etc., are used to describe various components and are used for the purpose of distinguishing one component from another. However, the first component and the second component may be arbitrarily named according to the convenience of those skilled in the art. Accordingly, unless otherwise noted below, a "first" component may be a "second" component and vice versa.

The terms used in the description of the present disclosure are used only to describe specific embodiments and are not intended to limit the present disclosure. For example, a component expressed in the singular includes plural components unless the context clearly indicates otherwise. In addition, the terms "comprises," "comprising," "including," and "having" are inclusive and therefore specify the presence of stated features, integers, steps, operations, elements, and/or components, but do not preclude the possibility of the presence or addition of one or more other features, integers, steps, operations, elements, components, and/or groups thereof.

In addition, unless otherwise defined, all terms used herein, including technical or scientific terms, have the same meanings as generally understood by those skilled in the art to which the present disclosure pertains. Terms defined in commonly used dictionaries should be interpreted as having meanings consistent with their meanings in the context of the relevant art, and will not be interpreted as having ideal or excessively formal meanings unless the context defines the meanings explicitly.

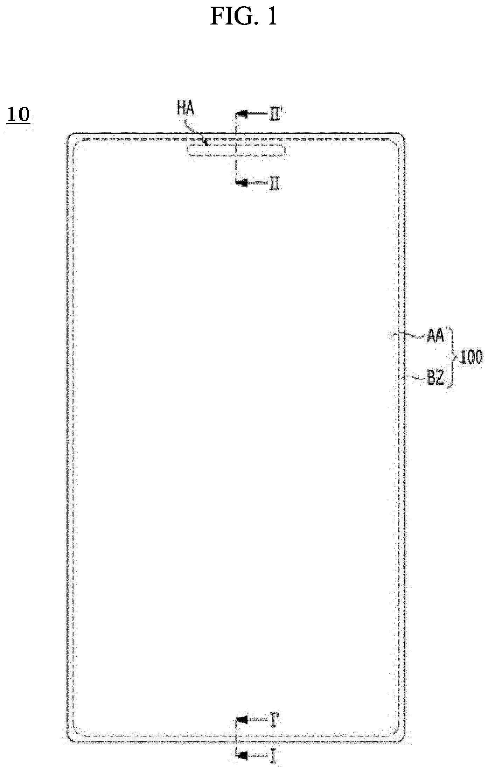

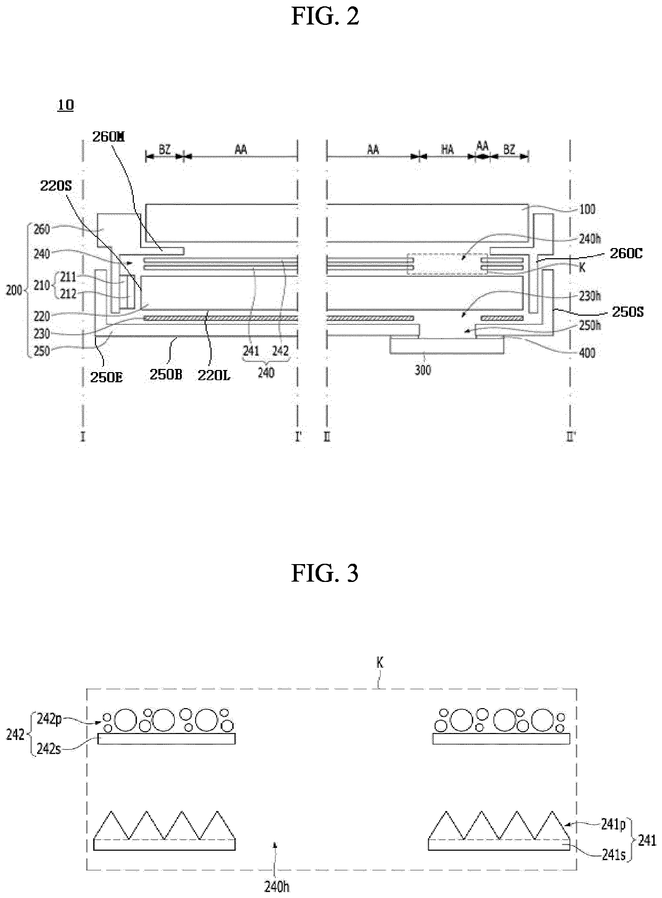

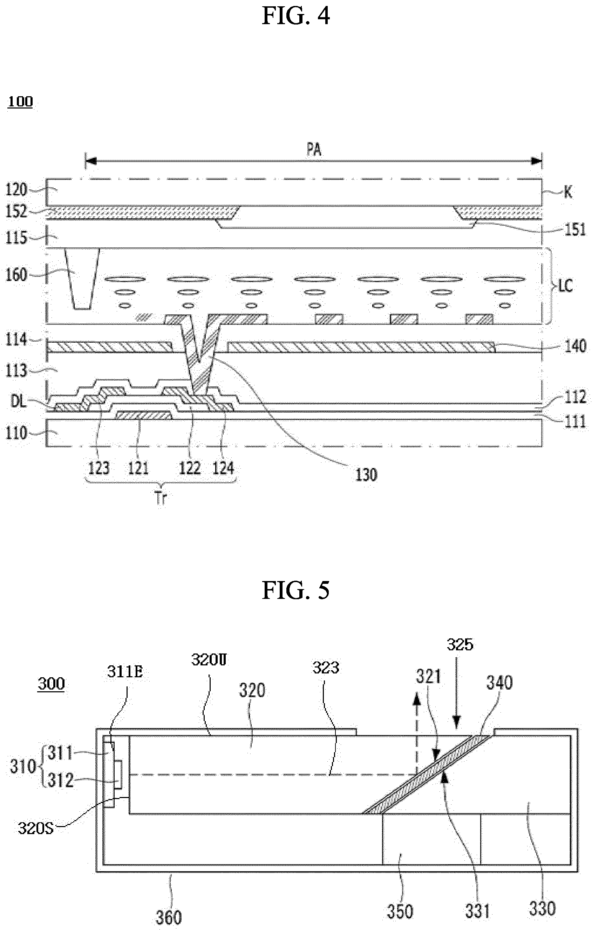

FIG. 1 is a schematic illustration of a display apparatus 10 according to an embodiment of the present disclosure. FIG. 2 is a cross-sectional view taken along lines I-I' and II-II' of FIG. 1. FIG. 3 is an enlarged diagram of area K of FIG. 2. FIG. 4 is a cross-sectional view of a subpixel of the display apparatus 10.

Referring to FIGs. 1 to 4, the display apparatus 10 includes a liquid crystal display panel 100, a backlight unit 200 (which may also be referred to herein as a backlight assembly 200 or simply a backlight 200), and an optical module 300.

The liquid crystal display panel 100 is configured to generate an image to be provided to a user. For example, the liquid crystal display panel 100 includes an active area AA in which a plurality of pixel areas is located (the pixel areas may also be referred to herein as pixels), and a bezel area BZ located outside the active area AA. The liquid crystal display panel 100 may include a sensing area HA for sensing external light or capturing an image within the active area AA. The sensing area HA of the liquid crystal display panel 100 provides external light to the optical module 300.

The liquid crystal display panel 100 includes a liquid crystal layer LC that overlaps the pixel areas. Various signals may be applied to each pixel area through signal lines. For example, liquid crystals located in a portion of the liquid crystal layer overlapping each pixel area may be rotated by a vertical electric field or a horizontal electric field formed in the corresponding pixel area through the signal lines. Accordingly, in the display apparatus according to one embodiment of the present disclosure, an image of various colors may be generated by light emitted from the active area AA of the liquid crystal display panel 100.

The liquid crystal display panel 100 includes the liquid crystal layer LC located between a first display substrate 110 and a second display substrate 120, as best shown in FIG. 4. The first display substrate 110 and the second display substrate 120 may include an insulating material or other materials. The first display substrate 110 and the second display substrate 120 may include a transparent material. For example, the first display substrate 110 and the second display substrate 120 include glass or plastic in some non-limiting examples. The second display substrate 120 includes the same or a different material from the first display substrate 110 in some embodiments. The liquid crystal layer LC includes liquid crystals manipulated using various technologies. For example, the liquid crystals of the liquid crystal layer LC may be manipulated using an in-plane switching mode(IPS) or the fringe field switching mode (FFS). The liquid crystals of the liquid crystal layer LC overlapping each subpixel area PA may be rotated by a vertical electric field or a horizontal electric field formed in the corresponding subpixel area PA by a gate signal and a data signal. For example, each subpixel area PA or each subpixel PA may include a pixel electrode 130 and a common electrode 140 for forming a horizontal electric field.

In such an embodiment, a constant power voltage is supplied to the common electrode 140 of each subpixel area PA. A driving voltage corresponding to the data signal applied to each subpixel area PA is supplied to the pixel electrode 130 of the corresponding subpixel area PA according to the gate signal applied to the corresponding subpixel area PA. That is, in the display apparatus 10, a horizontal electric field is formed in each subpixel area PA by the driving voltage applied to the pixel electrode 130 of the corresponding subpixel area PA and the power voltage applied to the common electrode 140. The driving voltage applied to the pixel electrode 130 of each subpixel area PA may be maintained for one frame or some other time.

At least one thin film transistor Tr and a storage capacitor Cst are located in each subpixel area PA. The thin film transistor Tr of each subpixel area PA generate a driving voltage corresponding to a data signal applied to the corresponding subpixel area PA according to a gate signal applied to the corresponding subpixel area PA. The thin film transistor Tr of each subpixel area PA is electrically connected to gate lines GL and data lines DL. For example, the thin film transistor Tr of each subpixel area PA includes a gate electrode 121 electrically connected to one of the gate lines GL, a semiconductor pattern 122 including a region overlapping the gate electrode 121, a drain electrode 123 electrically connected to one end of the semiconductor pattern 122, and a source electrode 124 electrically connected to the other end of the semiconductor pattern 122.

The gate electrode 121 includes a conductive material. For example, the gate electrode 121 may include a metal, such as aluminum (Al), chromium (Cr), copper (Cu), molybdenum (Mo), titanium (Ti), or tungsten (W). The semiconductor pattern 122 is located on the gate electrode 121. The semiconductor pattern 122 includes a semiconductor material. For example, the semiconductor pattern 122 may include amorphous silicon (a-Si), polycrystalline silicon (poly-Si), or an oxide semiconductor, such as IGZO. The semiconductor pattern 122 includes a channel region located between a drain region and a source region. For example, the gate electrode 121 overlaps the channel region of the semiconductor pattern 122. The drain region and the source region of the semiconductor pattern 122 are located outside the gate electrode 121.

The drain region and the source region of the semiconductor pattern 122 have a lower resistance than the channel region of the semiconductor pattern 122. For example, the drain region and the source region of the semiconductor pattern 122 include a conducting region of an oxide semiconductor. The channel region of the semiconductor pattern 122 is a non-conducting region of an oxide semiconductor. The semiconductor pattern 122 is spaced apart from the gate electrode 121. The semiconductor pattern 122 is insulated from the gate electrode 121. For example, the channel region of the semiconductor pattern 122 have an electrical conductivity corresponding to a voltage supplied to the gate electrode 121. The drain region of the semiconductor pattern 122 is electrically connected to the source region of the semiconductor pattern 122 according to a signal applied to the gate electrode 121.

The drain electrode 123 and the source electrode 124 include a conductive material. For example, the drain electrode 123 and the source electrode 124 may include a metal, such as aluminum (Al), chromium (Cr), copper (Cu), molybdenum (Mo), titanium (Ti), or tungsten (W). The drain electrode 123 and the source electrode 124 may include a different material from the gate electrode 121. For example, the drain electrode 123 and the source electrode 124 are located on a different layer from the gate electrode 121. The source electrode 124 is located on the same layer as the drain electrode 123. The source electrode 124 includes the same material as the drain electrode 123. The source electrode 124 is formed by the same or a different process as the drain electrode 123. For example, the source electrode 124 is formed simultaneously with the drain electrode 123 in an embodiment.

The drain electrode 123 is electrically connected to the drain region of the semiconductor pattern 122. The source electrode 124 is electrically connected to the source region of the semiconductor pattern 122. The drain electrode 123 and the source electrode 124 are insulated from the gate electrode 121. The source electrode 124 is spaced apart from the drain electrode 123. For example, the drain electrode 123 of each subpixel area PA are electrically connected to one of the data lines DL. The drain electrode 123 is formed integrally with one of the data lines DL. The pixel electrode 130 of each subpixel area PA is electrically connected to the source electrode 124 of the corresponding subpixel area PA.

The storage capacitor Cst of each subpixel area PA maintains a signal applied to the gate electrode 121 of the corresponding subpixel area PA for one frame. For example, the storage capacitor Cst of each subpixel area PA is electrically connected to the gate electrode 121 of the corresponding subpixel area PA and a power voltage supply line that supplies the power voltage.

The thin film transistor Tr and the storage capacitor Cst of each subpixel area PA are located between the first display substrate 110 and the liquid crystal layer LC. A plurality of insulating films 111, 112, 113, and 114 may be located between the first display substrate 110 and the liquid crystal layer LC to prevent unnecessary conductive connection. For example, a gate insulating film 111, an element protection film 112, a planarization film 113, and an interlayer insulating film 114 are located between the first display substrate 110 and the liquid crystal layer LC.

The gate insulating film 111 may be located close to the first display substrate 110 or in some embodiments, directly on the first display substrate 110. The semiconductor pattern 122 of each subpixel area PA is insulated from the gate electrode 121 of the corresponding subpixel area PA by the gate insulating film 111. For example, the gate insulating film 111 covers the gate electrode 121 of each subpixel area PA. The semiconductor pattern 122 of each subpixel area PA is located on the gate insulating film 111. Each of the drain electrode 123 and the source electrode 124 of each subpixel area PA are in direct contact with a portion of the semiconductor pattern 122 located within the corresponding subpixel area PA. For example, the drain electrode 123 and the source electrode 124 of each subpixel area PA are located on the gate insulating film 111. The gate insulating film 111 includes an insulating material. For example, the gate insulating film 111 may include an inorganic insulating material, such as silicon oxide (SiOₓ) or silicon nitride (SiNₓ).

The element protection film 112 or protection film 112 is located on the gate insulating film 111. The element protection film 112 may prevent damage to the thin film transistor Tr located within each subpixel area PA due to external impact and moisture. For example, the semiconductor pattern 122, the drain electrode 123, and the source electrode 124 of each subpixel area PA are covered by the element protection film 112. The element protection film 112 includes an insulating material. For example, the element protection film 112 may include an inorganic insulating material, such as silicon oxide (SiOx) or silicon nitride (SiNx).

The planarization film 113 is located on the element protection film 112. The planarization film 113 may remove steps caused by the thin film transistor Tr and the storage capacitor Cst of each subpixel area PA. For example, the upper surface of the planarization film 113 facing the liquid crystal layer LC is parallel to the upper surface of the first display substrate 110 facing the liquid crystal layer LC. The planarization film 113 includes an insulating material. The planarization film 113 may include a different material from the element protection film 112. The planarization film 113 may include a material having relatively high fluidity. For example, the planarization film 113 may include an organic insulating material.

The common electrode 140 is located on the planarization film 113. The interlayer insulating film 114 is located between the planarization film 113 and the liquid crystal layer LC. The common electrode 140 of each subpixel area PA is insulated from the pixel electrode 130 of the corresponding subpixel area PA by the interlayer insulating film 114. For example, the interlayer insulating film 114 covers the common electrode 140 of each subpixel area PA. The pixel electrode 130 of each subpixel area PA is located between the interlayer insulating film 114 and the liquid crystal layer LC. Each pixel electrode 130 has at least one slit. The interlayer insulating film 114 includes an insulating material. For example, the interlayer insulating film 114 may include an inorganic insulating material.

Color filters 151, a black matrix 152, and an upper protective film 115 are located between the liquid crystal layer LC and the second display substrate 120. The color filters 151 overlap the subpixel areas PA. For example, each color filter 151 may overlap one or more of the subpixel areas PA. Each color filter 151 may represent a specific color using light having passed through the liquid crystal layer LC. For example, light having passed through each color filter 151 may represent one of red, blue, and green. The black matrix 152 is located parallel to the color filters 151. For example, the end of each color filter 151 overlaps the black matrix 152. Although FIG. 4 illustrates that the end of each color filter 151 overlaps the black matrix 152, and the ends of two adjacent color filters 151 do not overlap each other on the black matrix 152, the present disclosure is not limited thereto. The ends of two adjacent color filters 151 may overlap each other on the black matrix 152.

The black matrix 152 includes a material capable of reflecting or absorbing light. For example, light having passed through the liquid crystal layer LC of each subpixel area PA passes through the color filter 151 of the corresponding subpixel area PA located within an area defined by the black matrix 152, and is emitted to the outside. Accordingly, in the display apparatus 10, an image including various colors may be provided to a user.

The black matrix 152 overlaps the signal lines GL and DL. The thin film transistor Tr and the storage capacitor Cst of each subpixel area PA overlap the black matrix 152. Therefore, in the display apparatus 10, the signal lines GL and DL and the thin film transistor Tr and the storage capacitor Cst of each subpixel area PA are not be recognized by the user due to the black matrix 152. That is, in the display apparatus 10, deterioration of the quality of an image caused by recognition of the signal lines GL and DL and the thin film transistor Tr and the storage capacitor Cst of each subpixel area PA by the user may be prevented. The color filters 151 and the black matrix 152 are covered by the upper protective film 115. The upper protective film 115 may prevent damage to the color filters 151 and the black matrix 152 due to external impact and moisture. The upper protective film 115 includes an insulating material. For example, the upper protective film 115 may include an inorganic insulating material, such as silicon oxide (SiOₓ) or silicon nitride (SiNx).

A spacer 160 is located between the interlayer insulating film 114 and the upper protective film 115. The spacer 160 maintains a constant gap between the interlayer insulating film 114 and the upper protective film 115. Accordingly, in the display apparatus 10, the liquid crystal layer LC of each subpixel area PA has the same thickness. Therefore, in the display apparatus 10, light passing through the liquid crystal layer LC of each subpixel area PA has the same optical path. In addition, in the display apparatus 10, light passing through the liquid crystal layer LC of each subpixel area PA has the same luminance as light having passed through the liquid crystal layer LC of a different subpixel area PA in which the same horizontal electric field is formed.

The backlight unit 200 is located below the liquid crystal display panel 100. The backlight unit 200 supplies light to the liquid crystal display panel 100. For example, the backlight unit 200 includes a backlight source element 210 (which may also be referred to herein as a first light source 210, a light source 210 or a light element 210), a backlight guide plate 220, a backlight reflector 230, and a backlight sheet 240.

The backlight source element 210 may supply light to the liquid crystal display panel 100 through the backlight guide plate 220. For example, the backlight source element 210 is located a side surface 220S of the backlight guide plate 220. The backlight source element 210 includes a backlight circuit board 211 and a backlight source 212 or light source 212 mounted on the backlight circuit board 211. The backlight source 212 may be a self-luminous element capable of generating and emitting light. For example, the backlight source 212 is an LED in some embodiments.

The backlight reflector 230 is located below the backlight guide plate 220. For example, the backlight guide plate 220 is located between the backlight reflector 230 and the liquid crystal display panel 100. The backlight reflector 230 includes a material capable of reflecting light. For example, the backlight reflector 230 may include a metal, such as aluminum (Al) or silver (Ag). Accordingly, in the display apparatus 10, light emitted through a lower surface 220L of the backlight guide plate 220 may be reflected toward the liquid crystal display panel 100 by the backlight reflector 230. Therefore, in the display apparatus 10, the amount of light supplied to the liquid crystal display panel 100 may be increased by the backlight unit 200.

The backlight sheet 240 is located between the backlight guide plate 220 and the liquid crystal display panel 100. The light supplied to the liquid crystal display panel 100 through the backlight guide plate 220 to the liquid crystal display panel 100 may have an overall uniform luminance as a result of passing through the backlight sheet 240. For example, the backlight sheet 240 has a stacked structure of a prism sheet 241 and a diffusion sheet 242.

The prism sheet 241 includes a prism member 241p or prism 241p located on a first base substrate 241s. The cross-sectional shape of the prism member 241p may be a shape in which triangles are repeatedly arranged or in other words, the cross-sectional shape of the prism 241p is a series of repeating and adjacent triangles. The first base substrate 241s includes a transparent material. For example, the first base substrate 241s may include plastic. The prism member 241p includes a transparent material. For example, the prism member 241p may be formed of the same material as the first base substrate 241s. In such an embodiment, an interface between the first base substrate 241s and the prism member 241p may not be recognized or is not visible to a user.

The diffusion sheet 242 includes diffusion particles 242p dispersed on a second base substrate 242s. The second base substrate 242s may include a transparent material. For example, the second base substrate 242s may include plastic. The second base substrate 242s may include the same material as the first base substrate 241s or may be a different material. The diffusion particles 242p may have various sizes. Accordingly, in the display apparatus 10, the uniformity of light supplied to the liquid crystal display panel 100 through the backlight sheet 240 may be improved. The diffusion particles 242p may be fixed on the second base substrate 242s by a transparent resin or some other adhesive.

The backlight unit 200 includes a bottom cover 250 configured to accommodate the backlight source element 210, the backlight guide plate 220, the backlight reflector 230, and the backlight sheet 240. The bottom cover 250 includes an insulating material. For example, the bottom cover 250 may include plastic. The bottom cover 250 may include a bottom surface 250B and side walls 250S protruding from the edge 250E, which may be an outermost edge or surface, of the bottom surface 250B. The backlight reflector 230 is located between the backlight guide plate 220 and the bottom surface 250B of the bottom cover 250. The backlight source element 210, the backlight guide plate 220, and the backlight sheet 240 are located within a space formed by the side walls 250S of the bottom cover 250. For example, the side walls 250S of the bottom cover 250 surround the backlight source element 210, the backlight guide plate 220, and the backlight sheet 240.

The backlight unit 200 includes a middle frame 260 for supporting the liquid crystal display panel 100. The middle frame 260 may be coupled to the bottom cover 250. For example, the middle frame 260 may include a coupling area 260C extending between the bottom cover 250 and the backlight guide plate 220. In other words, at least a portion of a sidewall of the middle frame 260 overlaps with an inner sidewall surface of the bottom cover 250 to form a couping area where the middle frame 260 is coupled to the bottom cover 250. The backlight source element 210 is fixed to the coupling area 260C of the middle frame 260. For example, the backlight source element 210 is attached to the coupling area 260C of the middle frame 260 by an adhesive member. The middle frame 260 includes a mounting area 260M extending between the backlight sheet 240 and the liquid crystal display panel 100. The mounting area 260M of the middle frame 260 overlaps the edge of the backlight sheet 240. For example, the mounting area 260M of the middle frame 260 overlaps the bezel area BZ of the liquid crystal display panel 100. The active area AA of the liquid crystal display panel 100 may not overlap the mounting area 260M of the middle frame 260. For example, a central area of the backlight sheet 240 may be exposed from or through an opening in the middle frame 260. The mounting area 260M of the middle frame 260 may be in direct contact with the backlight sheet 240 and may be configured as extensions of the middle frame 260 that extend under and support the liquid crystal display panel 100 by a selected distance. Accordingly, in the display apparatus 10, movement of the backlight sheet 240 and/or the liquid crystal display panel 100 may be prevented by the middle frame 260.

The backlight reflector 230 includes a through hole 230h that overlaps and is aligned with the sensing area HA of the liquid crystal display panel 100. The backlight sheet 240 includes a sheet hole 240h that overlaps and is aligned with the sensing area HA of the liquid crystal display panel 100. The sheet hole 240h may be a through hole. The bottom cover 250 includes a cover hole 250h that overlaps and is aligned with the sensing area HA of the liquid crystal display panel 100. The first base substrate 241s and the second base substrate 242s of the backlight sheet 240 may not overlap the sensing area HA of the liquid crystal display panel 100, but rather, form boundaries of the sheet hole 240h and/or the sensing area HA.

The optical module 300 detects external light or is capable of capturing an image through the liquid crystal display panel 100 and the backlight unit 200. For example, the optical module 300 may include at least one of a camera or an IR sensor. The optical module 300 is located below the backlight unit 200. The optical module 300 is adhered to or otherwise couped to the bottom surface 250B of the bottom cover 250 by an adhesive tape 400. However, the present disclosure is not limited thereto. The optical module 300 may also be fastened to the rear surface of the bottom cover 250 by a fastener, such as a screw or bolt.

As such, since the backlight reflector 230 includes the through hole 230h overlapping the sensing area HA and the backlight sheet 240 includes the sheet hole 240h overlapping the sensing area HA, light emitted by the backlight source element 210 may not be supplied to the sensing area HA of the liquid crystal display panel 100. Even if light emitted by the backlight source element 210 is supplied to the sensing area HA of the liquid crystal display panel 100, the intensity of the light supplied to the sensing area HA may be less than the intensity of light supplied to the active area AA of the liquid crystal display panel 100 excluding the sensing area HA. In other words, the area of the display apparatus 10 that includes the sensing area HA may be visible to a user because there are no pixels at this location nor is light emitted at the sensing area HA. Any light from the display panel 100 that passes through the sensing area HA from the backlight source element 210 will have a lower luminance or less intensity relative to the light supplied by the active area AA. Therefore, a luminance deviation may occur between the active area AA of the liquid crystal display panel 100 and the sensing area HA of the liquid crystal display panel 100.

In an embodiment of the present disclosure, the optical module 300 may further include a light source element capable of providing light to the sensing area HA of the liquid crystal display panel 100 separately from the backlight source element 210 in order to overcome luminance deviation at the sensing area HA and present uniform light to the user.

FIG. 5 is a view showing the detailed configuration of the optical module 300 in the display apparatus 10.

As shown in FIG. 5, the optical module 300 includes a case 360 for accommodating a module light source element 310 (second light source 310, light source 310 or optical light source 310), a visible light reflecting structure 320, an infrared light transmitting structure 330, a optical sheet 340, an optical element 350, and other aspects of the optical module 300 described below. The case 360 fixes or couples the aspects of the optical module 300 together and protects the same from external impact.

The visible light reflecting structure 320 and the infrared light transmitting structure 330 include inclined surfaces 321 and 331, respectively. The inclined surface 321 of the visible light reflecting structure 320 and the inclined surface 331 of the infrared light transmitting structure 330 are disposed to face each other. The inclined surface 321 of the visible light reflecting structure 320 and the inclined surface 331 of the infrared light transmitting structure 330 overlap the sensing area HA of the liquid crystal display panel 100. The visible light reflecting structure 320 and the infrared light transmitting structure 330 may be formed of the same material as the backlight guide plate 220 of the backlight unit 200 or a different material.

The optical sheet 340 is disposed between the inclined surface 321 of the visible light reflecting structure 320 and the inclined surface 331 of the infrared light transmitting structure 330. The optical sheet 340 reflects light emitted from the module light source element 310 to the sensing area HA of the liquid crystal display panel 100. In addition, the optical sheet 340 may transmit external light applied through the sensing area HA of the liquid crystal display panel 100. The detailed configuration of the optical sheet 340 will be described later.

The module light source element 310 is located on one side surface 320S of the visible light reflecting structure 320, which may be a left or right side surface. The module light source element 310 is located outside the sensing area HA of the liquid crystal display panel 100. The side surface 320S of the visible light reflecting structure 320 where the module light source element 310 is located perpendicular to the upper surface 320U of the visible light reflecting structure 320 facing the backlight guide plate 220. Accordingly, in the display apparatus 10, light emitted from the module light source element 310 may be supplied to the sensing area HA of the liquid crystal display panel 100 by the optical sheet 340 located on the inclined surface 321 of the visible light reflecting structure 320, as illustrated schematically by dashed arrow 323. Specifically, the module light source element 310 emits light that is reflected by the optical sheet 340 and is emitted through the sensing area HA to improve luminance and intensity of light at the sensing area HA and overcome the luminance disparity described above. The angle of the optical sheet 340 is selected to reflect light toward and through the sensing area HA and the holes 230h, 240h, 250h aligned with the sensing area HA. The inclined surfaces 321, 331 may have the same angle as the optical sheet 340 as the inclined surfaces 321, 331 directly abut and are positioned at an interface with the optical sheet 340 and/or the layers of the optical sheet 340 may be coated on the inclined surfaces 321, 331, as described below.

The module light source element 310 includes a module circuit board 311 and a plurality of module light sources 312. Each module light source 312 is a self-luminous element capable of generating and emitting light. For example, each module light source 312 may include an LED. The module light sources 312 may be the same elements as the backlight source 212 or different elements. Each module light source 312 is mounted on one end face 311E of the module circuit board 311. The module circuit board 311 is fixed to the case 360 by an adhesive or a fastener.

The module light sources 312 may be turned on/off simultaneously. The module light sources 312 may be driven simultaneously with the backlight source 212. For example, in the display apparatus 10, the liquid crystal display panel 100 displays an image using light emitted from the backlight source element 210 and light emitted from the module light source element 310. That is, in the display apparatus 10, when the liquid crystal display panel 100 displays an image, light emitted from the module light source element 310 may be supplied to the sensing area HA of the liquid crystal display panel 100, as described above. Accordingly, in the display apparatus 10, when the liquid crystal display panel 100 displays an image, light supplied to the sensing area HA may have substantially the same luminance as light supplied to the active area AA via the optical module 300 and reflection of light from the optical sheet 340. Therefore, in the display apparatus 10, image quality deterioration due to a luminance deviation between the active area AA and the sensing area HA may be prevented.

In the display apparatus 10, external light applied through the sensing area HA of the liquid crystal display panel 100 may pass through the sheet hole 240h of the backlight sheet 240, the through hole 230h of the backlight reflector 230, and the cover hole 250h of the bottom cover 250. The external light having passed therethrough may reach the optical module 300.

The optical sheet 340 is disposed between the inclined surface 321 of the visible light reflecting structure 320 and the inclined surface 331 of the infrared light transmitting structure 330.

The inclined surface 321 of the visible light reflecting structure 320 and the inclined surface 331 of the infrared light transmitting structure 330 are disposed to face each other, and the optical sheet 340 is disposed between the inclined surface 321 of the visible light reflecting structure 320 and the inclined surface 331 of the infrared light transmitting structure 330. Accordingly, external light applied through the sensing area HA of the liquid crystal display panel 100 may pass through the inclined surface 321 of the visible light reflecting structure 320, the optical sheet 340, and the inclined surface 331 of the infrared light transmitting structure 330, thereby allowing the optical element 350 to sense the external light. The optical sheet 340 may reflect light below a certain wavelength, such as visible light from the module light emitting element 310 while transmitting light at a higher wavelength such as infrared light, as described below. In this way, the optical element 350 can sense external infrared light while visible light emitted from the module light source element 310 is directed to the user to resolve the luminance disparity described above.

Accordingly, in the display apparatus 10, external light supplied to the optical element 350 may not be refracted and/or diffused by the backlight sheet 240. That is, in the display apparatus 10, external light may be detected by the optical element 350 without distortion by the backlight sheet 240. Therefore, the display apparatus 10 may have improved external light detection characteristics and enables the optical element 350 to be disposed under the active area of the display apparatus 10 to reduce bezel size without a corresponding reduction in luminance at the sensing area HA.

The optical element 350 includes an element capable of detecting external light. For example, the optical element 350 may include a camera and/or an IR sensor. The optical element 350 is disposed below the inclined surface 321 of the visible light reflecting structure 320, the inclined surface 331 of the infrared light transmitting structure 330, and the optical sheet 340. The optical element 350 is fixed inside the case 360.

The case 360 has an opening 325 in an area overlapping the sensing area HA of the liquid crystal display panel 100. For example, the case 360 includes the opening 325 that overlaps and is aligned with the through hole 230h of the backlight reflector 230, the sheet hole 240h of the backlight sheet 240, and the cover hole 250h of the bottom cover 250. The opening 325 and each of the holes 230h, 240h, 250h have the same size and shape in some embodiments. In some embodiments, at least one or all of the opening 325 and the holes 230h, 240h, 250h have a different size and shape from each other.

The case 360 is adhered to the rear or bottom surface 250B of the bottom cover 250 by the adhesive tape 400. However, the present disclosure is not limited thereto. The optical module 300 may be fastened to the rear surface of the bottom cover 250 by a fastener, such as a screw.

Further, the side surface 320S of the visible light reflecting structure 320 where the module light source element 310 is located may have an inclined surface or may be inclined relative to vertical and/or a horizontal bottom surface of the case 360 instead of being vertical and perpendicular to the horizontal bottom surface of the case 360 as shown in FIG. 5.

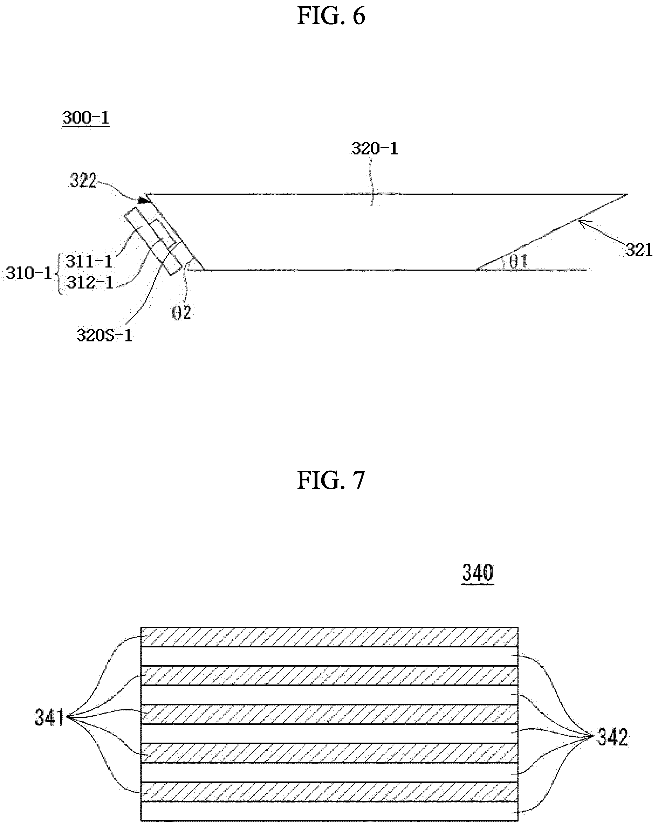

FIG. 6 is a view showing the configuration of a module light source element 310-1 and a visible light reflecting structure 320-1 of an optical module 300-1 according to an embodiment of the present disclosure. The remaining configuration of the optical module 300-1 except for the module light source element 310 and the visible light reflecting structure 320 is the same as that described in FIG. 5 and repetitive description is omitted.

As shown in FIG. 6 with continuing reference to FIG. 5, the optical modules 300, 300-1 include the module light source element 310, 310-1, the visible light reflecting structure 320, 320-1, the infrared light transmitting structure 330, the optical sheet 340, the optical element 350, and the case 360 for accommodating and fixing the same and protecting the same from external impact.

The visible light reflecting structures 320, 320-1 and the infrared light transmitting structure 330 may include inclined surfaces 321 and 331, respectively. The inclined surface 321 of the visible light reflecting structure 320 and the inclined surface 331 of the infrared light transmitting structure 330 may be disposed to face each other. The inclined surface 321 of the visible light reflecting structure 320 and the inclined surface 331 of the infrared light transmitting structure 330 may overlap the sensing area HA of the liquid crystal display panel 100. The visible light reflecting structure 320 and the infrared light transmitting structure 330 may be formed of the same material as the backlight guide plate 220 of the backlight unit 200. As shown in FIG. 6, a side surface 320S-1 of the visible light reflecting structure 320-1 where the module light source element 310 is located in the module 300-1 has an inclined surface 322. The inclined surface 322 or inclined surface 322 is at an angle θ2 relative to horizontal that may be any value between and excluding 0 and 90 degrees. The angle θ2 of the plane 322 of the visible light reflecting structure 320-1 is preferably greater than an angle θ1 of the inclined surface 321 of the visible light reflecting structures 320, 320-1 relative to horizontal but may also be the same as or less than the angle θ1 in some embodiments. The angle θ1 may likewise be any value between and excluding 0 and 90 degrees.

The inclined surface or surface 322 facing the module light source element 310-1 allows for further variation and optimization of the light extraction and luminance in the sensing area HA. In some embodiments, the module light source element 310-1 may be arranged at an angle relative to horizontal that is the same as angle θ2 of the inclined surface 322 such that the module light source element 310-1 is aligned with, and emits all light directly toward the largest possible surface area of the inclined surface or surface 322 to further improve, increase, and/or optimize luminance. The module light source element 310-1 can also be arranged at a different selected angle between and excluding 0 and 90 degrees in some applications.

The optical sheet 340 may be located between the inclined surface 321 of the visible light reflecting structure 320 and the inclined surface 331 of the infrared light transmitting structure 330. The optical sheet 340 may reflect light emitted from the module light source element 310 to the sensing area HA of the liquid crystal display panel 100. In addition, the module sheet 340 may transmit external light applied through the sensing area HA of the liquid crystal display panel 100. The detailed configuration of the optical sheet 340 will be described later.

The module light source element 310-1 is located on or facing the inclined surface 322 of the visible light reflecting structure 320-1. Accordingly, in an embodiment of the display apparatus 10 including the optical module 300-1, light emitted from the module light source element 310-1 may be supplied to the sensing area HA of the liquid crystal display panel 100 by the optical sheet 340 disposed on the inclined surface 321 of the visible light reflecting structure 320-1.

The module light source element 310-1 includes a module circuit board 311-1 and a plurality of module light sources 312-1. Each module light source 312-1 may be a self-luminous element capable of generating and emitting light. For example, each module light source 312-1 may include an LED. The module light sources 312-1 may be the same elements as the backlight source 212. Each module light source 312-1 may be mounted on one end of the module circuit board 311-1. The module circuit board 311-1 may be fixed to the case 360 by an adhesive means or a fastening means, such as those described herein.

The module light sources 312-1 may be turned on/off simultaneously. The module light sources 312-1 may be driven simultaneously with the backlight source 210. For example, in the display apparatus 10 incorporating the optical module 300-1, the liquid crystal display panel 100 may display an image using light emitted from the backlight source element 210 and light emitted from the module light source element 310. That is, in the display apparatus according to some embodiments, when the liquid crystal display panel 100 displays an image, light emitted from the module light source element 310 may be supplied to the sensing area HA of the liquid crystal display panel 100. Accordingly, in the display apparatus according to some embodiments of the present disclosure, when the liquid crystal display panel 100 displays an image, the light supplied to the sensing area HA may have substantially the same luminance as light supplied to the active area AA. Therefore, in the display apparatus according to some embodiments of the present disclosure, image quality deterioration due to a luminance deviation between the active area AA and the sensing area HA may be prevented.

In the display apparatus according to some embodiments of the present disclosure, external light applied through the sensing area HA of the liquid crystal display panel 100 may pass through the sheet hole 240h of the backlight sheet 240, the through hole 230h of the backlight reflector 230, and the cover hole 250h of the bottom cover 250. The external light having passed therethrough may reach the optical module 300-1.

The optical sheet 340 may be disposed between the inclined surface 321 of the visible light reflecting structure 320 and the inclined surface 331 of the infrared light transmitting structure 330.

The inclined surface 321 of the visible light reflecting structure 320 and the inclined surface 331 of the infrared light transmitting structure 330 may be disposed to face each other, and the optical sheet 340 may be disposed between the inclined surface 321 of the visible light reflecting structure 320 and the inclined surface 331 of the infrared light transmitting structure 330. Accordingly, external light applied through the sensing area HA of the liquid crystal display panel 100 may pass through the inclined surface 321 of the visible light reflecting structure 320, the optical sheet 340, and the inclined surface 331 of the infrared light transmitting structure 330, thereby allowing the optical element 350 to sense the external light.

Accordingly, in the display apparatus 10, external light supplied to the optical element 350 may not be refracted and/or diffused by the backlight sheet 240. That is, in the display apparatus 10, external light may be detected by the optical element 350 without distortion by the backlight sheet 240. Therefore, the display apparatus 10 may have improved external light detection characteristics.

The optical element 350 may include an element capable of detecting external light. For example, the optical element 350 may include a camera and an IR sensor. The optical element 350 may be disposed below the inclined surface 321 of the visible light reflecting structure 320, the inclined surface 331 of the infrared light transmitting structure 330, and the optical sheet 340. The optical element 350 may be fixed inside the case 360.

The case 360 may have an opening in an area overlapping the sensing area HA of the liquid crystal display panel 100. For example, the case 360 may include the opening overlapping the through hole 230h of the backlight reflector 230, the sheet hole 240h of the backlight sheet 240, and the cover hole 250h of the bottom cover 250.

The case 360 may be adhered to the rear surface of the bottom cover 250 by the adhesive tape 400. However, the present disclosure is not limited thereto. The optical module 300 may be fastened to the rear surface of the bottom cover 250 by a fastening means, such as a screw.

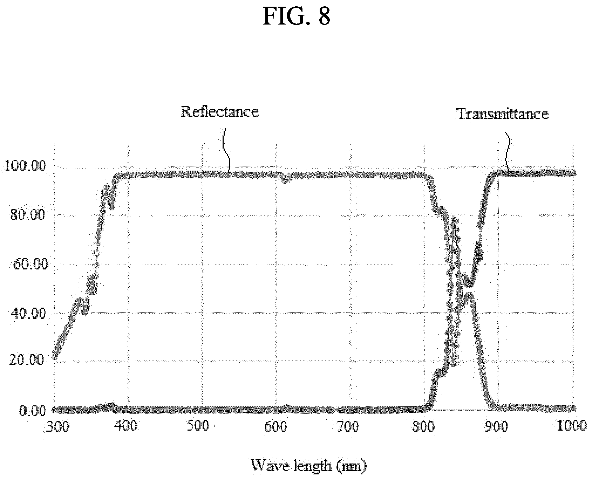

FIG. 7 is a view showing the detailed configuration of the optical sheet 340 of the optical module 300 of the display apparatus 10, and FIG. 8 is a graph showing the transmittance of the optical sheet 340 according to one or more embodiments of the present disclosure.

As shown in FIG. 7, the optical sheet 340 is configured such that a high refractive index material 341 and a low refractive index material 342 are repeatedly disposed in tens to hundreds of thin layers. The high refractive index material 341 may include titanium oxide (TiO₂), tantalum oxide (Ta₂O₅), and/or zirconium oxide (ZrO₂) having a refractive index of 2.4 to 2.6.

The low refractive index material 342 may include silica (SiO₂) or magnesium fluoride (MgF₂) having a refractive index of 1.38 to 1.46. For the refractive index materials 341, 342, the terms "high" and "low" are relative to each other such that the material selected for the high refractive index material is greater than the material selected for the low refractive index material 342. The optical sheet 340 is a layer stack where the high refractive index material 341 and the low refractive index material 342 are alternatively and repeatedly stacked on each other and in direct contact with each other, as shown in FIG. 7.

As shown in FIG. 8, the optical sheet 340 configured in this manner may reflect or transmit light depending on the wavelength of the light incident on the optical sheet 340. For example, when the wavelength of light incident on the optical sheet 340 is 900 nm or less, the optical sheet 340 reflects the incident light. On the contrary, when the wavelength of light incident on the optical sheet 340 is 900 nm or more, the optical sheet 340 transmits 90% or more of the incident light. Therefore, the optical sheet 340 according to one embodiment of the present disclosure may reflect visible light and transmit infrared light which allows for emitted visible light to be directed to the user to improve luminance while allowing external infrared light to pass through the optical sheet 340 to reach and be captured by the optical element 350.

Further, in the display apparatus 10, the optical sheet 340 of the optical module 300 may not be provided separately or may not be a separate structure. For example, FIGs. 5 and 6 illustrate that the optical sheet 340 is disposed between the inclined surface 321 of the visible light reflecting structure 320 and the inclined surface 331 of the infrared light transmitting structure 330, but the present disclosure is not limited thereto and the optical sheet 340 may be formed as part of the visible light reflecting structure 320 and/or the infrared light transmitting structure 330.

As described with reference to FIG. 7, the high refractive index material 341 and the low refractive index material 342 may be repeatedly coated in tens to hundreds of thin layers on the inclined surface 321 of the visible light reflecting structure 320 and/oror the inclined surface 331 of the infrared light transmitting structure 330.

As such, when the high refractive index material 341 and the low refractive index material 342 are coated on the inclined surface 321 of the visible light reflecting structure 320 or the inclined surface 331 of the infrared light transmitting structure 330, light emitted from the module light source element 310 may be reflected by the inclined surface 321 of the visible light reflecting structure 320 and/or the inclined surface 331 of the infrared light transmitting structure 330, and be supplied to and emitted through the sensing area HA of the liquid crystal display panel 100. In addition, when the inclined surface 321 of the visible light reflecting structure 320 and/or the inclined surface 331 of the infrared light transmitting structure 330 is coated with the high refractive index material 341 and the low refractive index material 342, external light applied through the sensing area HA of the liquid crystal display panel 100 may pass through the inclined surface 321 of the visible light reflecting structure 320 and/or the inclined surface 331 of the infrared light transmitting structure 330, and reach the light source element 350.

In addition, in a display apparatus according to one or more embodiments of the present disclosure, the infrared light transmitting structure 330 may be omitted. FIGs. 5 and 6 illustrate that the infrared light transmitting structure 330 is disposed so that the inclined surface 321 of the visible light reflecting structure 320 and the inclined surface 331 of the infrared light transmitting structure 330 face each other, but the present disclosure is not limited thereto. For example, the inclined surface 321 of the visible light reflecting structure 320 may include a dichroic mirror. In addition, the optical sheet 340 may be disposed on the inclined surface 321 of the visible light reflecting structure 320, or the high refractive index material 341 and the low refractive index material 342 may be repeatedly coated in tens to hundreds of thin layers on the inclined surface 321 of the visible light reflecting structure 320, as shown in FIG. 7, and the infrared light transmitting structure 330 may be omitted.

As such, in embodiments where the inclined surface 321 of the visible light reflection structure 320 includes a dichroic mirror, the optical sheet 340 is disposed on the inclined surface 321 of the visible light reflection structure 320, and/or or the high refractive index material 341 and the low refractive index material 342 are repeatedly coated on the inclined surface 321 of the visible light reflection structure 320. As a result, light emitted from the module light source element 310 may be reflected by the inclined surface 321 of the visible light reflection structure 320 and/or the optical sheet 340 and be supplied to the sensing area HA of the liquid crystal display panel 100, and external light applied through the sensing area HA of the liquid crystal display panel 100 may pass through the inclined surface 321 of the visible light reflection structure 320 and reach the light source element 350.

As a result, the display apparatus according to one or more embodiments of the present disclosure may include the liquid crystal display panel 100 located on the upper surface of the backlight guide plate 220, and the optical module 300 located on the lower surface of the backlight guide plate 220. In addition, the liquid crystal display panel 100 may include the sensing area HA for detecting external light, and the optical module 300 may include the inclined surface 321 of the visible light reflecting structure 320 and the inclined surface 331 of the infrared light transmitting structure 330 that overlap the sensing area HA, the optical sheet 340 disposed between the inclined surface 321 of the visible light reflecting structure 320 and the inclined surface 331 of the infrared light transmitting structure 330, and the module light source element 310 located on the side surface of the visible light reflecting structure 320. Accordingly, in the display apparatus according to one or more embodiments of the present disclosure, when the liquid crystal display panel 100 displays an image, light supplied to the sensing area HA of the liquid crystal display panel 100 by the module light source element 310 that is turned on/off simultaneously with the backlight source element 210 may have the same luminance as light supplied to the active area AA of the liquid crystal display panel 100. In addition, in the display apparatus according to one or more embodiments of the present disclosure, when the liquid crystal display panel 100 does not display an image, external light applied through the sensing area HA of the liquid crystal display panel 100, the backlight guide plate 220, the inclined surface 321 of the visible light reflecting structure 320, the optical sheet 340, and the inclined surface 331 of the infrared light transmitting structure 330 may be detected by the optical element 350. Therefore, in the display apparatus according to one or more embodiments of the present disclosure, external light may be detected without deteriorating the quality of an image.

The display apparatus according to one or more embodiments of the present disclosure is described as having the optical element 350 including a camera and an IR sensor. However, in a display apparatus according to one or more additional embodiments of the present disclosure, the optical element 350 may include various elements. For example, in a display apparatus according to an embodiment of the present disclosure, the optical element 350 may include one of a camera and an IR sensor. In addition, in a display apparatus according to an embodiment of the present disclosure, the optical element 350 may further include at least one of various sensors. For example, in a display apparatus according to an embodiment of the present disclosure, the optical element 350 may include at least one of a motion sensor, an illuminance sensor, and an ultrasonic sensor. Accordingly, in the display apparatus according to an embodiment of the present disclosure, a degree of freedom in the configuration of the optical element 350 may be improved.

The display apparatus according to one or more embodiments of the present disclosure has been described as having the module light sources 312 that are the same elements as the backlight source 212. In a display apparatus according to an embodiment of the present disclosure, the type and number of module light sources 312 may be determined depending on the luminance of light supplied to the active area AA of the liquid crystal display panel 100 by the backlight source 212. In addition, in a display apparatus according to an embodiment of the present disclosure, the type and number of the module light sources 312 may be determined depending on the area ratio of the active area AA to the sensing area HA of the liquid crystal display panel 100. That is, in a display apparatus according to an embodiment of the present disclosure, when the liquid crystal display panel 100 displays an image, the type and number of the module light sources 312 may be adjusted so that the luminance of light supplied to the sensing area HA of the liquid crystal display panel 100 is substantially the same as the luminance of light supplied to the active area AA of the liquid crystal display panel 100. Accordingly, in the display apparatus according to an embodiment of the present disclosure, deterioration of the quality of an image due to a luminance deviation between the active area AA and the sensing area HA of the liquid crystal display panel 100 may be effectively prevented.

As is apparent from the above description, a display apparatus according to the concepts of the present disclosure has the following effects.

First, since a second light source element of an optical module may be used to provide backlight to a sensing area, a luminance deviation between the active area and the sensing area of a liquid crystal display panel may be minimized and/or eliminated.

Second, since a backlight reflector includes a through hole overlapping the sensing area of the liquid crystal display panel, a backlight sheet includes a sheet hole overlapping the sensing area of the liquid crystal display panel, and a bottom cover includes a cover hole overlapping the sensing area of the liquid crystal display panel, the optical module may detect external light through the sensing area of the liquid crystal display panel without deteriorating the quality of an image.

Third, since the optical element is located below the case and the display panel instead of outside of an next to the display panel, the bezel may be reduced or in other words, a size of the bezel may be reduced.

The benefits and advantages according to the embodiments are not limited to the above description, and it will be understood that various other benefits and advantages are encompassed by the disclosure.

## Claims

1. A display apparatus (10), comprising:
a backlight (200) comprising a light guide plate (220) and a first light source (210);
a liquid crystal display panel (100) located on an upper surface of the light guide plate (220) and comprising a sensing area (HA); and
an optical module (300) located on a lower surface of the light guide plate (220) and comprising a reflective structure and/or a transmissive structure each having an inclined surface (321, 331), a second light source (310), and an optical element (350),
wherein the inclined surface (321) of the reflective structure and/or the inclined surface (331) of the transmissive structure overlaps the sensing area (HA) of the liquid crystal display panel (100).

2. The display apparatus (10) according to claim 1, wherein the second light source (310) and the optical element (350) are located on or face different surfaces of the reflective structure and/or the transmissive structure.

3. The display apparatus (10) according to claim 1 or 2, wherein the second light source (310) is located outside of the sensing area (HA).

4. The display apparatus (10) according to any of claims 1 to 3, wherein the optical module (300) comprises the reflective structure and further comprises an optical sheet (340) disposed on the inclined surface (321) of the reflective structure.

5. The display apparatus (10) according to claim 4, wherein the optical sheet (340) and the optical element (300) overlap the sensing area (HA).

6. The display apparatus (10) according to any of claims 1 to 5, wherein the optical sheet (340) includes repeatedly disposed layers of a high refractive index material and a low refractive index material, wherein the layers are preferably alternately disposed.

7. The display apparatus (10) according to the preceding claims, wherein the backlight (200) further comprises a bottom cover (250) configured to accommodate the light guide plate (220) and the first light source (210),
wherein the bottom cover (250) comprises a cover hole (250h) that overlaps the sensing area (HA).

8. The display apparatus (10) according to any of the preceding claims, wherein the optical module (300) comprises the transmissive structure and the reflective structure, each having the inclined surface (321, 331), and
wherein the inclined surface (321) of the reflective structure and the inclined surface (331) of the transmissive structure are disposed to face each other.

9. The display apparatus (10) according to claim 8, wherein the optical sheet (240) is disposed between the inclined surface (321) of the reflective structure and the inclined surface (331) of the transmissive structure.

10. The display apparatus (10) according to any of claims 4 to 9, wherein the optical module (300) further comprises a case (360) configured to accommodate the reflective structure, the second light source (310), the optical sheet (340), the optical element (350), and, when dependent on claim 5, the transmissive structure,
wherein the case (360) has an opening (325) in a portion thereof that overlaps the sensing area (HA).

11. The display apparatus (10) according to any of claims 4 to 10, wherein the optical sheet (340) is or includes a layer stack including a high refractive index material alternately disposed with a low refractive index material.

12. The display apparatus (10) according to any of claims 6 to 11, wherein the high refractive index material is configured to reflect visible light, and
wherein the low refractive index material is configured to transmit infrared light.

13. The display apparatus (10) according to any of claims 6 to 12, wherein the high refractive index material comprises at least one of titanium oxide (TiO₂), tantalum oxide (Ta₂O₅), or zirconium oxide (ZrO₂), and
wherein the low refractive index material comprises silica (SiO₂) or magnesium fluoride (MgF₂).

14. The display apparatus (10) according to any of the preceding claims, wherein the backlight (200) further comprises:
a backlight sheet (240) located above the light guide plate (220); and
a backlight reflector (230) located below the light guide plate (220),
wherein the backlight sheet (240) comprises a through hole configured to overlap the sensing area (HA).

15. The display apparatus (10) according to any of the preceding claims, wherein the inclined surface (321) of the reflective structure comprises a dichroic mirror.
